# FASCICULE DE BREVET EUROPEEN

(11) **EP 3 574 122 B1**
(45) Date de publication et mention de la délivrance du brevet: **01.09.2021**
(21) Numéro de dépôt: 18701787.6
(22) Date de dépôt: 15.01.2018
(51) Int. Cl.: C22B 3/28, C22B 3/38, C22B 3/24, C22B 3/42, C22B 3/00, H01M 8/008

(54) **PROCEDE DE RECUPERATION DU PLATINE ET DU COBALT CONTENUS DANS UNE PILE A COMBUSTIBLE**
VERFAHREN ZUR WIEDERGEWINNUNG VON PLATIN UND KOBALT AUS BRENNSTOFFZELLEN
PROCESS FOR THE RECOVERY OF PLATINUM AND COBALT FROM FUEL CELLS

(30) Priorité: 24.01.2017 FR 1750548
(43) Date de publication de la demande: 04.12.2019
(73) Titulaire: Commissariat à l'Énergie Atomique et aux Énergies Alternatives, 75015 Paris (FR); Centre National de la Recherche Scientifique, 75016 Paris (FR); Institut Polytechnique de Grenoble, 38000 Grenoble (FR); Université Grenoble Alpes, 38400 Saint-Martin-d'Hères (FR)
(72) Inventeur: VINCENT, Rémi, 38000 Grenoble (FR); CHATTOT, Raphaël, 38000 Grenoble (FR); DUBAU, Laëtitia, 38000 Grenoble (FR); DUCLOS, Lucien, 76440 Saint Michel d'Halescourt (FR); SVECOVA, Lenka, 38000 Grenoble (FR); THIVEL, Pierre-Xavier, 38000 Grenoble (FR)
(74) Mandataire: Cabinet Laurent & Charras
(86) Numéro de dépôt international: PCT/FR2018/050083
(87) Numéro de publication internationale: WO 2018/138427

(56) Documents cités:
- WO-A1-2005/093107
- MANIS KUMAR JHA ET AL: "Hydrometallurgical recovery/recycling of platinum by the leaching of spent catalysts: A review", HYDROMETALLURGY., vol. 133, 28 novembre 2012 (2012-11-28), pages 23-32, XP055296220, NL ISSN: 0304-386X, DOI: 10.1016/j.hydromet.2012.11.012
- RIKKA WITTSTOCK ET AL: "Challenges in Automotive Fuel Cells Recycling", RECYCLING, vol. 1, no. 3, 1 décembre 2016 (2016-12-01), pages 343-364, XP055389926, DOI: 10.3390/recycling1030343

## Description

### DOMAINE DE L'INVENTION

La présente invention concerne un procédé de récupération de métaux contenus dans une pile à combustible, et plus particulièrement le platine et le cobalt contenus dans un assemblage membrane électrodes (AME).

La présente invention se situe dans le domaine des piles à combustible à membrane échangeuse de protons (PEMFC, de l'acronyme anglais « *proton exchange membrane fuel cell* »).

### ETAT ANTERIEUR DE LA TECHNIQUE

Les piles à combustible permettent de convertir de l'énergie chimique en énergie électrique grâce à des réactions d'oxydoréduction catalysées par un matériau, généralement à base de platine.

Que ce soit pour des raisons environnementales ou de coût, il est important de récupérer le platine qui est concentré au niveau de l'assemblage membrane électrodes (AME) des piles à combustible, et plus précisément au niveau des électrodes.

Cependant, la formulation du catalyseur peut compliquer la récupération du platine. En effet, le catalyseur à base de platine peut se présenter sous la forme de nanoparticules de carbone platiné. En outre, le catalyseur est souvent associé à la membrane échangeuse de protons qui est généralement réalisée en polymère fluoré.

Aussi, les procédés de récupération du platine d'un AME comportent généralement une première étape de séparation du catalyseur (par exemple des nanoparticules de carbone platiné) et de la membrane échangeuse de protons (par exemple un fluoropolymère).

Plusieurs techniques ont été développées pour effectuer cette séparation. Le document WO 2006/024507 divulgue un procédé dans lequel le fluoropolymère est dissous en milieu supercritique, par exemple de l'eau. Le document US 7 255 798 divulgue un procédé dans lequel le fluoropolymère est dissous dans un mélange eau/solvant organique en autoclave. Le document US 8 124 261 décrit la dispersion du fluoropolymère dans un mélange eau/alcool à une température comprise entre 100 et 150°C. Le document WO 2015/010793 décrit un procédé de séparation des nanoparticulcs de carbone platiné et du fluoropolymère dans un mélange eau/solvant organique sous ultrasons à température ambiante.

Des procédés permettant de s'affranchir de cette première étape de séparation ont également été développés. Ces procédés mettent en jeu une étape de lixiviation par un mélange acide/oxydant, et une étape de précipitation en présence de chlorure d'amonium.

Le document US 7 709 135 divulgue, ainsi, un procédé de récupération du platine dans lequel les AME sont broyés à froid avant d'être soumis à une lixiviation en présence d'un surfactant. Le lixiviat qui contient le platine est alors distillé, puis le platine est récupéré par précipitation.

Le document US 2006/0147791 divulgue un procédé dans lequel une PEMFC n'ayant pas été préalablement désassemblée est directement soumise à l'étape de lixiviation, le platine étant ensuite récupéré par précipitation.

Le document WO 2014/166494 divulgue un procédé de recyclage des métaux du groupe du platine à partir d'une structure catalytique. Dans ce procédé, les métaux du groupe du platine sont solubilisés dans un électrolyte comprenant un agent complexant, puis précipités par augmentation du pH sans séparation de l'électrolyte et des métaux du groupe du platine.

Quand bien même ces procédés permettent la récupération du platine, ils ne sont pas adaptés aux catalyseurs multimétalliques. En effet, dans ce cas, il est souhaitable de réaliser une récupération sélective des métaux.

Il existe donc un besoin de développer un procédé permettant une récupération sélective des métaux, notamment le platine et le cobalt contenus dans un AME comprenant des catalyseurs de type platine/cobalt sur support carboné ou non.

La présente invention apporte une solution à cette problématique grâce à une étape d'extraction du cobalt sous forme d'oxyde.

### EXPOSE DE L'INVENTION

Le Demandeur a mis au point un procédé mettant en jeu une étape de lixiviation directe d'un AME (assemblage membrane électrodes) d'une pile à combustible. Ce procédé permet d'extraire le cobalt sous forme d'oxyde à partir du lixiviat.

Plus précisément, la présente invention concerne un procédé de récupération du platine et du cobalt contenus dans un assemblage membrane électrodes (AME), comprenant au moins les étapes successives suivantes :
a) traitement de l'AME par lixiviation conduisant à un lixiviat contenant des ions du platine et des ions du cobalt,
b) extraction, à partir du lixiviat, des ions du platine et des ions du cobalt,
c) séparation des ions cobalt et des ions platine par formation et précipitation d'oxyde de cobalt.

Ce procédé comprend donc trois principales étapes : lixiviation, extraction et séparation.

### Lixiviation

La lixiviation consiste à faire passer un solvant sur un substrat solide pour solubiliser certains composants du substrat. Deux phases résultent de la lixiviation : une phase solide (composants du substrat non solubilisés), et une phase liquide, appelée lixiviat qui contient les composants du substrat qui ont été solubilisés.

Dans le cas présent, la lixiviation génère une phase solide contenant les parties de l'AME n'ayant pas été solubilisées, notamment la membrane échangeuse de protons et, le cas échéant, le support du catalyseur et/ou éventuellement des charges électroniquement conductrices.

Le procédé selon l'invention permet de réaliser l'étape a) de lixiviation directement sur une AME, sans étape préalable, que ce soit de broyage à froid ou autre.

De manière générale, les catalyseurs (platine et cobalt) présents dans les AME se présentent sous la forme de particules de métal ou d'alliages de métaux ayant un degré d'oxydation égal à 0. La lixiviation permet de mettre en solution ces catalyseurs, le cas échéant, en générant des ions de platine et de cobalt ayant un degré d'oxydation non nul.

De manière générale, la lixiviation est effectuée en milieu acide en présence d'un oxydant, avantageusement en phase aqueuse. Plus particulièrement, la lixiviation est avantageusement réalisée grâce à un mélange liquide comprenant un acide de Brønsted et un agent oxydant. Ce mélange est avantageusement réalisé en phase aqueuse, plus avantageusement dans l'eau.

L'acide de Brønstedest un composé capable de libérer un proton H⁺. Il est avantageusement un acide halogéné choisi dans le groupe comprenant l'acide chlorhydrique HCl, l'acide bromhydrique HBr, et l'acide iodhydrique HI. L'acide fluorhydrique HF peut éventuellement être utilisé.

L'agent oxydant est avantageusement un peroxyde, notamment le peroxyde d'hydrogène.

Le mélange mis en œuvre pour la lixiviation comprend une concentration en acide de Brønsted, avantageusement comprise entre 75 et 100% vol d'acide concentré à 37% massique, plus avantageusement entre 97 et 99 % vol (%vol : pourcentage volumique).

En outre, il comprend une concentration en agent oxydant, avantageusement comprise entre 0 et 25% vol d'agent oxydant concentré à 30 % massique, plus avantageusement entre 1 et 3% vol.

L'étape de lixiviation est avantageusement réalisée à une température comprise entre 20 et 109°C, plus avantageusement entre 20 et 30°C. Elle est avantageusement réalisée à 25°C.

L'homme du métier saura ajuster la durée de la lixiviation. A titre d'exemple, elle peut présenter une durée d'au moins 5 heures à 25°C.

Suite à l'étape a) de lixiviation, la phase solide est séparée de la phase liquide. En d'autres termes, l'AME est séparé de la phase liquide, c'est-à-dire le lixiviat. L'AME ainsi récupéré peut être recyclé pour une nouvelle utilisation.

Le lixiviat comprend des ions de platine et des ions de cobalt. De manière générale, il s'agit d'ions Pt(IV) et d'ions Co(II), avantageusement sous la forme de PtCl₆²⁻ et de CoCl₄²⁻ lorsque l'acide de Brønsted utilisé est l'acide chlorhydrique.

Conformément à l'invention, le lixiviat obtenu à l'issue de l'étape a) est traité de manière à extraire les ions du platine et les ions du cobalt.

### Extraction

Lors de l'étape b), les ions du platine et les ions du cobalt sont avantageusement extraits du lixiviat par extraction liquide/liquide ou par extraction à l'aide d'une résine.

Selon un mode de réalisation préféré, l'extraction est réalisée sur plusieurs étages afin d'améliorer le rendement. Ce mode de réalisation consiste à traiter le lixiviat en le soumettant, de manière successive, à plusieurs extractions liquide/liquide ou à plusieurs extractions à l'aide d'une résine.

### i) Extraction liquide/liquide

De manière générale, l'extraction liquide/liquide est réalisée avec un solvant d'extraction. Il s'agit d'un solvant non miscible avec le lixiviat. Ce solvant peut notamment être choisi parmi les oxydes de phosphine liquides, seuls ou en mélange. Les solvants organiques contenant des groupements amines tertiaires, ou amines quaternaires, ou diamides, ou imidazolium ou pyrrolidinium peuvent également être utilisés.

Les oxydes de phosphine sont avantageusement des oxydes de trialkylphosphine, plus avantageusement un mélange d'oxydes de trialkylphosphine, les groupements alkyle étant linéaires ou ramifiés. Le solvant d'extraction peut notamment être un mélange contenant des oxydes de phosphine choisis dans le groupe comprenant R₃P(O), R₂R'P(O), RR'₂P(O) et R'₃P(O), R étant un groupement octyle et R' étant un groupement hexyle. Il peut s'agir d'un mélange des quatre oxydes de phosphine R₃P(O), R₂R'P(O), RR'₂P(O) et R'₃P(O). A titre d'exemple, le solvant Cyanex®923 de chez Cytec, correspondant au numéro CAS 100786-00-3, peut être utilisé.

Ce solvant d'extraction peut être utilisé en combinaison avec un diluant d'extraction qui est avantageusement un solvant organique, par exemple un alcool organique ou un ester. Il peut notamment s'agir d'octanol ou de décanol.

Lorsque l'extraction liquide/liquide met en œuvre un diluant, le rapport volumique entre le solvant d'extraction et le diluant d'extraction est avantageusement compris entre 0,01 et 9, plus avantageusement entre 0,1 et 0,25.

A titre d'exemple, le solvant d'extraction peut être un mélange contenant un alcool organique tel que l'octanol et un mélange des quatre oxydes de phosphine R₃P(O), R₂R'P(O), RR'₂P(O) et R'₃P(O) mentionnés ci-dessus.

Comme déjà indiqué, l'extraction peut comprendre plusieurs extractions liquide/liquide successives. Dans ce cas, à l'issue de l'extraction, les fractions d'extraction sont avantageusement combinées et éventuellement concentrées avant de procéder à l'étape de séparation.

L'étape d'extraction est avantageusement réalisée à une température comprise entre 15 et 50°C, plus avantageusement entre 20 et 30°C. Elle est avantageusement réalisée à 25°C.

Une fois l'extraction liquide/liquide réalisée, la phase correspondant au solvant du lixiviat peut être recyclée en amont du procédé pour éventuellement être utilisée dans la lixiviation de nouveaux AME. Il s'agit avantageusement d'une phase aqueuse.

La phase correspond au solvant d'extraction (et éventuellement le diluant d'extraction) contient les ions de cobalt et de platine. Cette phase d'extraction est ensuite traitée pour séparer les ions cobalt et les ions platine.

### ii) Extraction au moyen d'une résine

Comme déjà indiqué, l'extraction des ions du platine et des ions du cobalt contenus dans le lixiviat peut également être réalisée à l'aide d'une résine.

De manière avantageuse, il s'agit d'une résine échangeuse d'anions basique. La résine comprend avantageusement des groupements choisis dans le groupe comprenant : amine tertiaire, amine quaternaire, oxyde de phosphine, et halogénure (préférentiellement des ions chlorure Cl⁻), seuls ou en mélange. La résine peut avantageusement comprendre une matrice en polystyrène ayant au moins un de ces groupements.

La résine peut être la résine échangeuse d'anions Lewatit® MP 62 de chez Lanxess.

Comme déjà indiqué, l'extraction peut comprendre plusieurs mises en contact successives avec la résine. Il peut s'agir d'une série de passages à travers plusieurs couches de résine.

L'étape d'extraction est avantageusement réalisée à une température comprise entre 15 et 50°C, plus avantageusement entre 20 et 30°C. Elle est avantageusement réalisée à 25°C.

L'extraction au moyen de cette résine correspond à la sorption des ions cobalt par absorption ou par adsorption. La phase liquide traitée par mise en contact avec la résine est ensuite séparée de la résine, les ions de cobalt et de platine étant fixés sur la résine.

### Séparation

Cette étape permet de séparer le cobalt et le platine.

Elle peut être réalisée au moyen d'une solution aqueuse contenant avantageusement au moins une base de Brønsted.

Plus précisément, elle peut être réalisée par mise en contact d'une solution aqueuse contenant une base de Brønsted avec la phase d'extraction résultant de l'extraction liquide/liquide ou avec la résine résultant de l'extraction au moyen d'une résine.

La solution aqueuse basique mise en œuvre dans l'étape de séparation comprend avantageusement une base de Brønsted. Cette base est avantageusement une base minérale. Il peut s'agir d'une base choisie dans le groupe comprenant les hydroxydes de métaux alcalins, notamment NaOH ou KOH, seuls ou en mélange. De manière générale, toute base minérale peut être utilisée.

Cette solution aqueuse basique présente une concentration molaire en base de Brønsted avantageusement comprise entre 0 et 6 mol.L⁻¹, plus avantageusement entre 1 et 4 mol.L⁻¹.

Le pH de cette solution est avantageusement compris entre 7 et 15.

A titre d'exemple, dans le cas où l'étape d'extraction a été effectuée par extraction liquide/liquide, la solution aqueuse basique peut présenter avantageusement une concentration molaire en base de Brønsted de 1,5 mol.L⁻¹.

A titre d'exemple, dans le cas où l'étape d'extraction a été effectuée à l'aide d'une résine, la solution aqueuse basique peut présenter avantageusement une concentration molaire en base de Brønsted de 1 mol.L⁻¹.

La mise en contact de la phase d'extraction ou de la résine avec la solution aqueuse contenant une base de Brønsted permet de séparer les ions de cobalt par formation et par précipitation d'oxyde de cobalt, alors que le platine reste en solution aqueuse sous forme ionique.

Lorsque l'extraction a été réalisée par extraction liquide/liquide, l'addition de la solution aqueuse basique engendre la formation d'une phase organique à base du solvant d'extraction et d'une phase aqueuse contenant les ions platine. En raison du pH basique de la solution aqueuse basique, les ions de platine peuvent être extraits du solvant d'extraction. Au contraire, lors de l'extraction de l'étape b), les ions de platine sont extraits de la phase aqueuse acide grâce au solvant d'extraction.

Dans ce cas, la phase aqueuse basique est séparée de la phase organique à base de solvant d'extraction, les deux phases étant non miscibles. La phase organique peut éventuellement être recyclée pour réaliser une nouvelle extraction selon l'étape b).

Lorsque l'extraction a été réalisée au moyen d'une résine, la mise en contact de la résine avec cette solution aqueuse basique est avantageusement précédée d'une mise en contact de la résine avec de l'eau. Ce traitement optionnel permet la désorption d'au moins une partie des ions cobalt fixés sur la résine. La résine résultant de cette étape de pré-séparation contient des ions de platine et éventuellement des ions de cobalt. La résine ainsi pré-traitée peut ensuite être mise en contact avec la solution aqueuse contenant une base de Brønsted. La résine peut ainsi subir plusieurs mises en contact avec plusieurs solutions de séparation, et éventuellement une ou plusieurs solutions de pré-séparation.

Dans ce cas, la phase aqueuse basique est séparée de la résine dépourvue d'ions de platine et de cobalt. La résine peut éventuellement être recyclée pour réaliser une nouvelle extraction selon l'étape b).

L'étape de séparation est avantageusement réalisée à une température comprise entre 15 et 50°C, plus avantageusement entre 20 et 30°C. Elle est avantageusement réalisée à 25°C.

Cependant, de manière générale, les étapes a), b), et c) peuvent être réalisées à une température comprise entre 15 et 109°C.

Comme déjà indiqué, suite à la mise en contact avec une solution aqueuse basique, le cobalt est sous forme solide (oxyde de cobalt précipité), alors que le platine est sous forme ionique en solution aqueuse. Le cobalt et le platine peuvent alors être séparés par toute technique de séparation d'une phase solide et d'une phase liquide, avantageusement par filtration.

Le platine ainsi récupéré se présente avantageusement sous la forme de platine IV, notamment du PtCl₆²⁻ lorsque de l'acide chlorhydrique a été utilisé comme acide de Brønsted lors de l'étape a) de lixiviation et lorsque, le cas échéant, une résine échangeuse d'anions chlorure a utilisée lors de l'étape b) d'extraction.

### Etapes complémentaires

La phase liquide aqueuse contenant les ions de platine et résultant de l'étape de séparation peut ensuite être traitée de manière à former des particules de platine.

Outre les étapes a), b) et c) du procédé selon l'invention détaillées ci-dessus, la phase liquide contenant le platine peut être utilisée comme source de nanoparticules de platine. Ces nanoparticules peuvent ensuite être déposées sur un support carboné pour obtenir un catalyseur supporté.

Ainsi, le procédé selon l'invention peut également comprendre les étapes successives suivantes :
d) formation de particules de platine par réduction des ions de platine issus de l'étape c),
e) dépôt des particules de platine sur un support carboné.

La formation de particules de platine, avantageusement des nanoparticules, est réalisée par réduction des ions de platine issus de l'étape c).

Pour ce faire, la phase liquide issue de l'étape c) de séparation peut notamment être mise en contact avec un polyol.

La réduction des ions de platine est avantageusement réalisée en milieu basique. En d'autres termes, la phase liquide contenant du platine et issue l'étape c) de séparation est avantageusement mise en contact avec au moins un polyol en présence d'une base de Brønsted.

Le polyol peut être tout type de polyol, seul ou en mélange, avantageusement un glycol par exemple l'éthylène glycol (HO-CH₂-CH₂-OH).

La base de Brønsted est avantageusement une base minérale. Elle est avantageusement choisie dans le groupe comprenant les hydroxydes de métaux alcalins, par exemple NaOH ou KOH, seuls ou en mélange. De manière avantageuse, la base est la soude, NaOH.

La réduction des ions de platine est avantageusement réalisée entre 15 et 35°C, plus avantageusement à 25°C.

La synthèse des particules de platine peut également être réalisée en présence d'un agent réducteur fort, par exemple NaBH4 ou N₂H₄, et d'un tensioactif non-ionique (polysorbate tel que le Tween® 20 ; polyol tel que le Brij® 30 ou Brij® 35) ou d'un tensioactif ionique tel que le citrate de sodium.

Les particules de platine ainsi obtenues peuvent éventuellement être isolées par tout type de technique de séparation liquide/solide conventionnelle, avantageusement par filtration.

De manière optionnelle, l'étape d) de réduction des ions de platine peut être réalisée en présence d'ions de cobalt, notamment des ions Co(II).

Le cas échéant, ces ions cobalt peuvent provenir de la solution aqueuse d'ions cobalt résultant de l'étape b) d'extraction au moyen d'une résine, plus particulièrement lorsque la résine est traitée avec de l'eau pour séparer une partie du cobalt.

Ce mode de réalisation (réduction des ions de platine et des ions de cobalt) permet d'obtenir un mélange de particules de platine et de particules de cobalt dans l'optique de synthétiser un catalyseur hybride platine/cobalt.

Selon un autre mode de réalisation, le procédé selon l'invention comprend en outre une étape de dépôt des particules de platine, éventuellement d'un mélange de particules de platine et de cobalt, sur un support, avantageusement sur un support carboné.

Cette étape de dépôt de particules peut être réalisée suite à l'isolation des particules de platine, et éventuellement de cobalt. Elle est, cependant, avantageusement réalisée directement après l'étape de réduction des ions de platine et éventuellement de cobalt.

Les particules de platine et éventuellement de cobalt peuvent être déposées sur un support, par exemple sur un support carboné choisi dans le groupe comprenant les particules de carbone, le noir de carbone, le graphène et les nanotubes de carbone à simple feuillet ou à multiple feuillet. De manière avantageuse le support carboné est constitué de nanoparticules de carbone, par exemple des particules du type Vulcan® XC 72.

Les nanoparticules de platine et éventuellement de cobalt sont déposées sur le support par diminution du pH, avantageusement à une valeur comprise entre 1 et 6. De manière avantageuse, le pH est diminué par ajout d'un acide de Brønsted avantageusement choisi dans le groupe comprenant l'acide sulfurique, l'acide chlorhydrique et tout autre acide minéral.

Les catalyseurs supportés, ainsi obtenus, peuvent ensuite être isolés par toute technique conventionnelle de séparation d'une phase solide et d'une phase liquide, avantageusement par filtration.

Le procédé selon l'invention présente de nombreux avantages comme la réduction de l'impact environnemental, le recyclage possible de la couche de diffusion d'une pile à combustible (GDL, de l'acronyme anglais « *gas diffusion layer* ») et une cinétique de dissolution rapide du platine et du cobalt.

Par ailleurs, le procédé selon l'invention permet un dépôt direct du platine sur un support sans étape de précipitation du platine, et une maitrise de la taille des particules de catalyseurs obtenues.

L'invention et les avantages qui en découlent ressortiront mieux des figures et exemples suivants donnés afin d'illustrer l'invention et non de manière limitative.

### FIGURES

La figure 1 correspond aux voltampérogrammes d'un catalyseur obtenu selon l'invention et d'un catalyseur commercial.
La figure 2 correspond aux courbes de réduction de l'oxygène pour un catalyseur obtenu selon l'invention et pour un catalyseur commercial.

### EXEMPLES DE REALISATION DE L'INVENTION

Un assemblage membrane électrodes (AME) constitué des éléments suivants a été traité selon le procédé objet de l'invention :
- une cathode en carbone, platine, cobalt et ionomère,
- une membrane en ionomère,
- une anode en carbone, platine et ionomère.

Le platine et le cobalt contenus dans cet AME ont été récupérés selon les étapes suivantes :
a) traitement de l'AME par lixiviation conduisant à un lixiviat contenant des ions du platine (Pt(IV)) et des ions du cobalt (Co(II)),
b) extraction à partir du lixiviat des ions du platine et des ions du cobalt,
c) séparation des ions cobalt et des ions platine suite à l'étape b).

L'étape a) de lixiviation a été réalisée par traitement de l'AME avec une solution d'acide chlorhydrique (12 mol.L⁻¹) et de peroxyde d'hydrogène (9,8 mol.L⁻¹) pendant une durée de 5 heures à 25°C.

Le lixiviat issu de l'étape b) a été extrait au moyen d'une résine échangeuse d'anions de type Lewatit® MP 62 de chez Lanxess, à une température de 25°C.

La résine a ensuite été lavée avec de l'eau de manière à séparer une partie des ions de cobalt (Co(II)), à une température de 25°C.

Ensuite, la résine a été mise en contact avec une solution aqueuse de soude (1 mol.L⁻¹), à une température de 25°C. La formation et la précipitation d'oxyde de cobalt a permis de séparer les ions de cobalt restant par filtration.

Les ions platine ont ensuite été réduits par mise en contact de la solution aqueuse contenant les ions de platine et d'une solution de soude et d'éthylène glycol (HO-CH₂-CH₂-OH) à 160°C pendant 180 minutes.

Les particules de platine ainsi obtenues ont été comparées à un catalyseur commercial (Pt/C 20% de chez Tanaka).

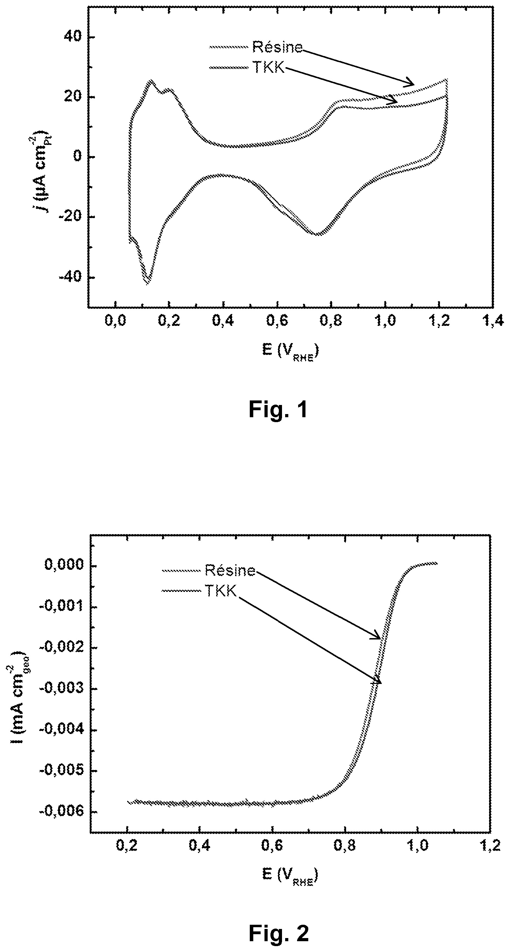

Les figures 1 et 2 montrent que le catalyseur obtenu selon le procédé de l'invention présente un voltampérogramme et une courbe de réduction de l'oxygène quasi identiques à ceux du catalyseur commercial. Ces courbes montrent donc que le procédé selon l'invention permet de recycler efficacement le platine contenu dans un AME.

## Revendications

1. Procédé de récupération du platine et du cobalt contenus dans un assemblage membrane électrodes (AME), comprenant au moins les étapes successives suivantes :
a) traitement de l'AME par lixiviation conduisant à un lixiviat contenant des ions du platine et des ions du cobalt,
b) extraction, à partir du lixiviat, des ions du platine et des ions du cobalt,
c) séparation des ions cobalt et des ions platine par formation et précipitation d'oxyde de cobalt.

2. Procédé selon la revendication 1, ***caractérisé* en ce que** la lixiviation est réalisée en phase aqueuse en présence d'un acide de Brønsted et d'un agent oxydant.

3. Procédé selon la revendication 2, ***caractérisé :***
• **en ce que** l'acide de Brønsted est un acide halogéné,
• et **en ce que** l'agent oxydant est un peroxyde.

4. Procédé selon l'une des revendications 1 à 3, ***caractérisé* en ce que** l'extraction à partir du lixiviat est réalisée par extraction liquide/liquide ou par extraction à l'aide d'une résine.

5. Procédé selon l'une des revendications 1 à 4, ***caractérisé* en ce que** l'extraction à partir du lixiviat est réalisée par extraction liquide/liquide avec un solvant d'extraction non miscible avec le lixiviat,
le solvant d'extraction étant choisi dans le groupe comprenant les oxydes de phosphine liquides ; et les solvants organiques contenant des groupements amines tertiaires, ou amines quaternaires, ou diamides, ou imidazolium ou pyrrolidinium ; seuls ou en mélange.

6. Procédé selon l'une des revendications 1 à 4, ***caractérisé* en ce que** l'extraction à partir du lixiviat est réalisée par extraction à l'aide d'une résine échangeuse d'anions basique comprenant des groupements choisis dans le groupe comprenant : amine tertiaire, amine quaternaire, oxyde de phosphine, et halogénure.

7. Procédé selon l'une des revendications 1 à 6, ***caractérisé* en ce que** l'étape de séparation est réalisée au moyen d'une solution aqueuse contenant une base de Brønsted.

8. Procédé selon l'une des revendications 1 à 7, ***caractérisé* en ce que** les étapes a), b), et c) sont réalisées à une température comprise entre 15 et 109°C.

9. Procédé selon l'une des revendications 1 à 8, ***caractérisé* en ce qu'**il comprend, en outre, les étapes successives suivantes :
d) formation de particules de platine par réduction des ions de platine issus de l'étape c),
e) dépôt des particules de platine sur un support carboné.

10. Procédé selon la revendication 9, **caractérisé en ce que** l'étape d) de réduction des ions platine est réalisée en présence d'ions de cobalt.

## Patentansprüche

1. Verfahren zur Wiedergewinnung von Platin und Kobalt aus einer Membran-Elektroden-Anordnung (MEA), das mindestens die folgenden Schritte enthält:
a) Behandlung der MEA durch Auslaugen, was zu einem Sickerwasser führt, das Platinionen und Kobaltionen enthält,
b) Extraktion der Platinionen und der Kobaltionen aus dem Sickerwasser,
c) Trennung der Kobaltionen und der Platinionen durch Bildung und Fällung von Kobaltoxid.

2. Verfahren nach Anspruch 1, ***dadurch gekennzeichnet, dass*** das Auslaugen in der wässrigen Phase und in Anwesenheit einer Brønsted-Säure und eines Oxidationsmittels durchgeführt wird.

3. Verfahren nach Anspruch 2, ***dadurch gekennzeichnet, dass:***
• die Bronsted-Säure eine halogenierte Säure ist,
• das Oxidationsmittel ein Peroxyd ist.

4. Verfahren nach einem der Ansprüche 1 bis 3, ***dadurch gekennzeichnet, dass*** die Extraktion aus dem Sickerwasser durch flüssig/flüssig-Extraktion oder durch Extraktion mittels eines Harzes geschieht.

5. Verfahren nach einem der Ansprüche 1 bis 4, ***dadurch gekennzeichnet, dass*** die Extraktion aus dem Sickerwasser durch flüssig/flüssig-Extraktion mit einem Extraktionslösungsmittel geschieht, das sich nicht mit dem Sickerwasser vermischt, das Extraktionslösungsmittel wird ausgewählt aus der Gruppe, die die flüssigen Phosphinoxide; sowie die organischen Lösungsmittel, die tertiären Amingruppen, oder quaternären Amine oder Diamide, oder Imidazolium oder Pyrrolidinium enthalten; alleine oder vermischt.

6. Verfahren nach einem der Ansprüche 1 bis 4, ***dadurch gekennzeichnet, dass*** die Extraktion aus Sickerwasser ausgeführt wird durch Extraktion mittels eines basischen Anionenaustauscherharzes der Gruppen, ausgewählt aus der Gruppe mit: tertiärem Amin, quaternärem Amin, Phosphinoxid und Halogenid.

7. Verfahren gemäß irgendeinem der Ansprüche 1 bis 6, ***dadurch gekennzeichnet, dass*** der Schritt der Abscheidung mittels einer wässrigen Lösung, die eine Brønsted-Base enthält, ausgeführt wird.

8. Verfahren gemäß irgendeinem der Ansprüche 1 bis 7, ***dadurch gekennzeichnet, dass*** die Schritte a), b) und c) bei einer Temperatur zwischen 15 und 109°C ausgeführt wird.

9. Verfahren gemäß einem der Ansprüche 1 bis 8, ***dadurch gekennzeichnet, dass*** es außerdem die folgenden Schritte umfasst:
d) Bildung von Platinteilchen durch Reduktion von Platinionen aus Schritt c),
e) Abscheidung der Platinteilchen auf einem Kohlenstoffträger.

10. Verfahren nach Anspruch 9, ***dadurch gekennzeichnet, dass*** der Schritt d) der Reduktion der Platinionen in Anwesenheit von Kobaltionen ausgeführt wird.

## Claims

1. Method for recovering platinum and cobalt contained in an electrode membrane assembly (EMA), comprising at least one of the following successive tasks:
a) processing of the EMA by lixiviation producing a lixiviate containing platinum ions and cobalt ions,
b) extraction from the lixiviate of platinum ions and cobalt ions,
c) separation of the cobalt ions from the platinum ions by the formation and precipitation of cobalt oxide.

2. Method according to claim 1, **characterized in that** the lixiviation is carried out in the aqueous phase in the presence of a Bronsted acid and an oxidant agent.

3. Method according to claim 2, **characterized in that**:
• the Brønsted acid is a halogenated acid,
• the oxidant agent is a peroxide.

4. Method according to one of the claims 1 to 3, **characterized in that** extraction from the lixiviate is carried out by liquid/liquid extraction or by extraction using a resin.

5. Method according to one of the claims 1 to 4, **characterized in that** the extraction from the lixiviate is carried out by liquid/liquid extraction using an extraction solvent which is not miscible with the lixiviate,
the extraction solvent is chosen from the group comprising liquid phosphine oxides and organic solvents containing groupings of tertiary amines or quaternary amines, or diamides, or imidazolium or pyrrolidinium; alone or mixed together.

6. Method according to one of the claims 1 to 4, **characterized in that** extraction from the lixiviate is performed by extraction using a basic anionic exchanger resin comprising groupings chosen from the group comprising: tertiary amine, quaternary amine, phosphine oxide and halogenide.

7. Method according to one of the claims 1 to 6, **characterized in that** the separation step is carried out using and acquiesce solution containing a Bronsted base.

8. Method according to one of the claims 1 to 7, **characterized in that** the steps a), b), and c) are performed at a temperature included between 15 and 109° C

9. Method according to one of the claims 1 to 8, **characterized in that** it comprises, in addition, the following successive steps:
d) formation of platinum particles by reduction of platinum ions obtained from step c),
e) deposit of platinum particles on a carbonated medium.

10. Method according to claim 9, **characterized in that** step d) of platinum ion reduction is performed in the presence of cobalt ions.
